# EUROPÄISCHE PATENTSCHRIFT

(11) **EP 2 483 135 B1**
(45) Veröffentlichungstag und Bekanntmachung des Hinweises auf die Patenterteilung: **06.05.2015**
(21) Anmeldenummer: 10732293.5
(22) Anmeldetag: 03.07.2010
(51) Int. Cl.: B62D 21/09, B62D 25/04

(54) **VERSTÄRKUNGSANORDNUNG FÜR EINE TÜRSÄULE EINES PERSONENKRAFTWAGENS UND VERFAHREN ZUM HERSTELLEN EINER SOLCHEN VERSTÄRKUNGSANORDNUNG**
REINFORCEMENT ARRANGEMENT FOR A DOOR PILLAR OF A PASSENGER CAR AND METHOD FOR PRODUCING SUCH A REINFORCEMENT ARRANGEMENT
DISPOSITIF DE RENFORCEMENT POUR UN MONTANT DE PORTIÈRE D'UN VÉHICULE PARTICULIER ET PROCÉDÉ DE FABRICATION ASSOCIÉ

(30) Priorität: 29.09.2009 DE 102009043265
(43) Veröffentlichungstag der Anmeldung: 08.08.2012
(73) Patentinhaber: Daimler AG, 70327 Stuttgart (DE)
(72) Erfinder: GENTSCH, Sascha, 04600 Altenburg (DE); GRAMER, Engelbert, 72184 Eutingen (DE); SEEFRIED, Johann, 72184 Eutingen (DE)
(74) Vertreter: JENSEN & SON
(86) Internationale Anmeldenummer: PCT/EP2010/004042
(87) Internationale Veröffentlichungsnummer: WO 2011/038794

(56) Entgegenhaltungen:
- EP-A2- 1 306 291
- DE-A1- 19 518 946
- DE-A1- 19 638 904

## Beschreibung

Die Erfindung betrifft eine Verstärkungsanordnung innerhalb eines Hohlraums einer Türsäule eines Personenkraftwagens der im Oberbegriff des Patentanspruchs 1 angegebenen Art. Des Weiteren betrifft die Erfindung ein Verfahren zum Herstellen einer solchen Verstärkungsanordnung gemäß dem Oberbegriff von Patentanspruch 5.

Aus der DE 10 2005 045 388 A1 und der DE 10 2005 057 707 A1 geht jeweils eine Verstärkungsanordnung innerhalb des Hohlraums einer jeweiligen Türsäule hervor. Die Türsäule ist üblicherweise durch eine Konstruktion in Blechschalenbauweise gebildet und umschließt demzufolge den besagten Hohlraum, in welchem jeweils eine derartige Verstärkungsanordnung vorgesehen ist, die insbesondere bei einem Überschlag des Personenkraftwagens eine übermäßige Deformation bzw. ein übermäßiges Einknicken der Türsäule vermeiden soll, welches zur Folge hätte, dass ein Überlebensraum für einen Passagier innerhalb der Fahrgastzelle des Personenkraftwagens übermäßig reduziert wird.

Heute gängige Verstärkungsanordnungen umfassen üblicherweise ein Verstärkungsprofil beispielsweise in Form eines Verstärkungsrohres, welches sich entlang des Dachsäulenbereichs in der Türsäule erstreckt und in einem unteren Bereich - insbesondere im Übergang zwischen dem Dachsäulenbereich und einem in Vertikalrichtung verlaufenden unteren Türsäulenbereich - über eine Stützeinrichtung der Verstärkungsanordnung abgestützt ist. Diese Stützeinrichtung soll insbesondere im Übergangs- bzw. Eckbereich zwischen dem Dachsäulenbereich und dem unteren Türsäulenbereich der Türsäule gewährleisten, dass das Verstärkungsprofil entsprechend zuverlässig gehalten und abgestützt wird.

Aus der DE 195 18 946 A1 geht eine gattungsgemäße Verstärkungsanordnung innerhalb einer Türsäule eines Personenkraftwagens hervor.

Aufgabe der vorliegenden Erfindung ist es, eine Verstärkungsanordnung und ein Verfahren der eingangs genannten Art zu schaffen, mittels welchen sich eine besonders steife und dennoch besonders gewichtsgünstige Türsäule ergibt.

Diese Aufgabe wird erfindungsgemäß durch eine Verstärkungsanordnung und ein Verfahren mit den Merkmalen der Patentansprüche 1 bzw. 5 gelöst. Vorteilhafte Ausgestaltungen mit zweckmäßigen und nicht-trivialen Weiterbildungen der Erfindung sind in den übrigen Patentansprüchen angegeben.

Um eine Verstärkungsanordnung zu schaffen, mittels welcher sich insgesamt eine besonders gewichtsgünstige Türsäule realisieren lässt, welche dennoch äußerst steif abgestützt ist, ist es erfindungsgemäß vorgesehen, dass das Verstärkungsprofil im Bereich der Stützanordnung mittels eines innerhalb des Hohlraums des Verstärkungsprofils angeordneten Innenprofils verstärkt ist. Mit anderen Worten ist es erfindungsgemäß vorgesehen, das Verstärkungsprofil in demjenigen Bereich zu verstärken, in welchem dieses nach unten hin durch die Stützeinrichtung abgestützt ist. Durch diese einfache, kostengünstige und dennoch hochwirksame Aussteifung des Verstärkungsprofils mittels des Innenprofils wird somit auf einfache Weise eine Verstärkungsanordnung geschaffen, welche in optimaler Weise an die auftretenden Belastungen angepasst ist.

So kann nämlich ein Verstärkungsprofil eingesetzt werden, welches insgesamt gegenüber dem bisherigen Stand der Technik eine geringere Wandstärke und/oder ein schwächeres Profil aufweist, welches in den geringer belasteten Bereichen jedoch hinreichend steif und stabil ist, und welches in den höher belasteten Bereichen - genauer gesagt im Bereich der Abstützung an der Stützeinrichtung - entsprechend durch ein Innenprofil verstärkt ist. Somit kann insgesamt eine höhere Steifigkeit des Verstärkungsprofils bei gleichzeitig geringerem Gewicht erreicht werden. Je nach Belastungsfall kann durch die Länge und den Beschnitt des Innenprofils dabei eine optimale und preisgünstige Anpassung an die Berechnungsergebnisse der Türsäule geschaffen werden.

Das Verstärkungsprofil und das Innenprofil sind aus jeweiligen Halbzeugen gebildet, deren Querschnitte vor dem Zusammenstecken umgeformt und aneinander angepasst sind, wobei das Verstärkungsprofil und das Innenprofil nach dem Zusammenstecken durch weiteres Umformen - beispielsweise durch Biegen entlang ihrer Längserstreckung - miteinander verbunden sind. Mit anderen Worten ergibt sich so bereits eine zumindest radial formschlüssige Verbindung des Verstärkungsprofils und des Innenprofils durch das Zusammenstecken, wobei die axiale Sicherung des Innenprofils innerhalb des Verstärkungsprofils dann im weiteren Umformschritt erreicht wird. Bevorzugt wird auch ein Ausführungsbeispiel, bei dem das Verstärkungsprofil und das Innenprofil aus jeweiligen Halbzeugen gebildet sind, deren Querschnitte nach dem Zusammenstecken umgeformt und formschlüssig miteinander verbunden sind. Mit anderen Worten ergibt sich eine vorteilhafte Ausführungsform dadurch, dass das Halbzeug des Verstärkungsprofils und das Halbzeug des Innenprofils zunächst zusammengesteckt und dann - beispielsweise durch Innenhochdruckumformen - umgeformt und somit formschlüssig miteinander verbunden werden.

Eine besonders einfach herstellbare Verstärkungsanordnung lässt sich dabei realisieren, indem das Innenprofil lediglich durch einen Formschluss mit dem äußeren Profil verbunden wird. Mit anderen Worten ist es bei der vorliegenden Konstellation auf einfache Weise möglich, auf Fügverbindungen oder dergleichen zur Verbindung des Verstärkungsprofils mit dem Innenprofil zu verzichten.

Eine weitere vorteilhafte Ausführungsform sieht vor, dass das Innenprofil zumindest im Bereich eines Stützprofils der Stützanordnung vorgesehen ist. Gerade in diesem Bereich stellt sich eine hohe Belastung des Verstärkungsprofils ein, insbesondere, wenn der Kraftwagen beispielsweise einem Überschlag ausgesetzt ist. Demzufolge ist es besonders vorteilhaft, das Innenprofil im Bereich dieses Stützprofils anzuordnen.

Das Innenprofil weist in weiterer Ausgestaltung der Erfindung an seinen Enden einen geraden oder schrägen Beschnitt auf. Durch die geeignete Wahl des Beschnitts, beispielsweise dessen Winkels, kann auf einfache Weise ein entsprechender mechanischer Wert der Türsäule erreicht werden.

Die vorstehend im Zusammenhang mit der erfindungsgemäßen Verstärkungsanordnung beschriebenen Vorteile gelten auch für das Verfahren gemäß Patentanspruch 5.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

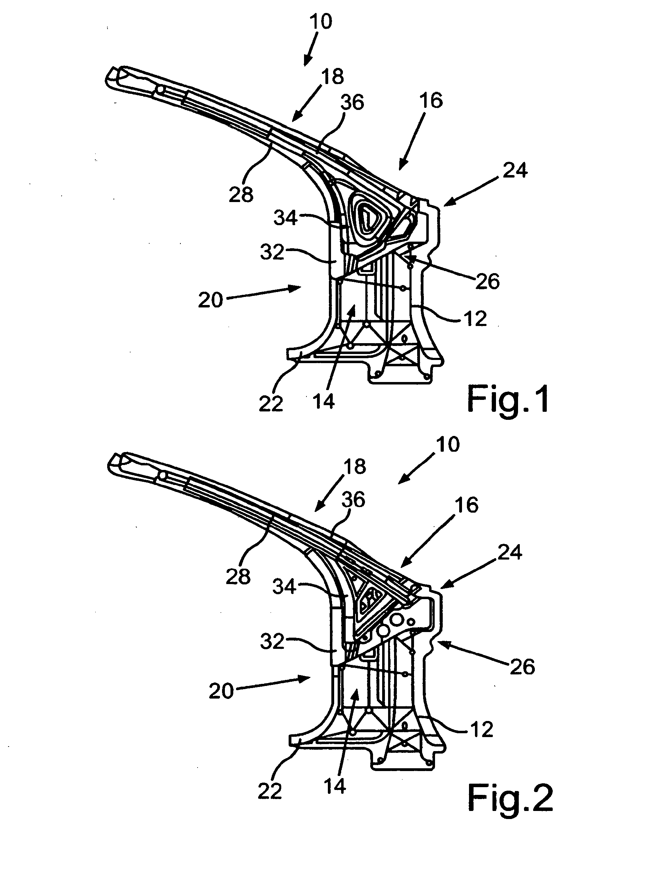

- Fig. 1: eine Seitenansicht auf die Verstärkungsanordnung innerhalb eines Hohlraums einer als A-Säule ausgebildeten Türsäule eines Personenkraftwagens mit einem insbesondere in einem Dachsäulenbereich verlaufenden Verstärkungsprofil, welches im Überrangsbereich über einem unteren Türsäulenbereich der Türsäule über eine Stützeinrichtung abgestützt ist, wobei die Stützeinrichtung eine dreieckförmige Blechkonstruktion mit zwei Teilschalen sowie insbesondere ein Stützprofil umfasst, und wobei das Verstärkungsprofil im Bereich der Stützeinrichtung bzw. des Stützprofils mittels eines innerhalb des Hohlraums des Verstärkungsprofils angeordneten Innenprofils verstärkt ist;
- Fig. 2: eine Seitenansicht auf die Verstärkungsanordnung gemäß Fig. 1, wobei insbesondere eine Teilschale der Stützeinrichtung weggelassen ist, so dass das sich im Wesentlichen innerhalb des Türsäulenbereichs der Türsäule erstreckende Stützprofil der Stützeinrichtung erkennbar ist, welches in einem Eckbereich zwischen dem Dachsäulenbereich und dem Türsäulenbereich der Türsäule an das Verstärkungsprofil angeschlossen ist, wobei im Bereich der Anschlussstelle des Stützprofils an dem Verstärkungsprofil wiederum innerhalb des Verstärkungsprofils das Innenprofil angeordnet ist;

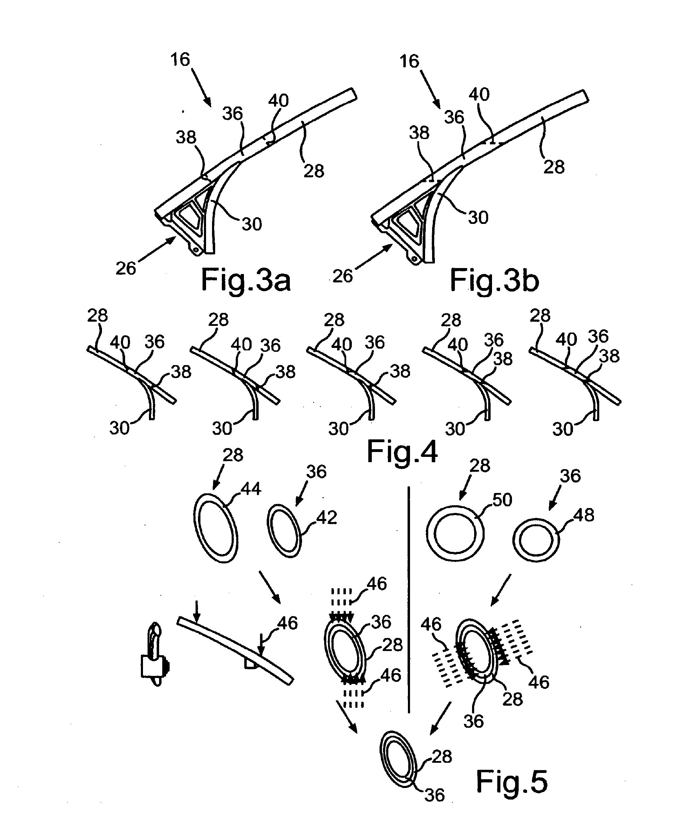

- Fig. 3a, 3b: jeweilige Seitenansichten auf das Verstärkungsprofil sowie insbesondere das Stützprofil der Stützanordnung, wobei im Anschlussbereich des Stützprofils an das Verstärkungsprofil innerhalb des Verstärkungsprofils das Innenprofil angeordnet ist, wobei das Innenprofil gemäß Fig. 3a an seinen jeweiligen Enden einen geraden Beschnitt und gemäß Fig. 3b an seinen jeweiligen Enden einen schrägen Beschnitt aufweist;
- Fig. 4: fünf schematische Seitenansichten des innerhalb des Dachsäulenbereichs und offenen Verstärkungsprofils sowie des innerhalb des Türsäulenbereichs verlaufenden Innenprofils der Stützeinrichtung wobei an der Anschlussstelle des Innenprofils an das Verstärkungsprofil das jeweilige Innenprofil des Verstärkungsprofils angeordnet ist, und wobei das Innenprofil an seinen jeweiligen Enden einen geraden oder schrägen Beschnitt aufweist; und in

- Fig. 5: eine Übersichtsdarstellung über zwei Varianten der Verbindung des Innenprofils mit dem Verstärkungsprofil, wobei links in einer ersten Variante das Verstärkungsprofil und das Innenprofil aus jeweiligen rohrförmigen Halbzeugen gebildet sind, deren Querschnitte bereits vor dem Zusammenstecken umgeformt sind, wodurch sich in radialer Richtung ein Formschluss ergibt, und wobei das Innenprofil dadurch formschlüssig in axialer Richtung innerhalb des Verstärkungsprofils fixiert wird, indem das Verstärkungsprofil und das Innenprofil gemeinsam in einem weiteren Umformprozess durch Biegen miteinander verbunden sind, und wobei gemäß der rechten Variante jeweilige rohrförmige Hohlquerschnitte gewählt sind, welche zunächst nicht formschlüssig miteinander verbunden sind, und welche erst nach dem Zusammenstecken sowohl in radialer wie auch in axialer Richtung dadurch formschlüssig miteinander verbunden werden, dass diese entsprechend gemeinsam umgeformt werden.

In den Figuren 1 und 2 ist jeweils in einer Seitenansicht eine Türsäule 10 in Form einer A-Säule eines offenen Personenkraftwagens dargestellt. Genauer gesagt ist jeweils lediglich eine Teilschale 12 beispielsweise aus Blech oder dergleichen dargestellt, welche mit einer zweiten, nicht dargestellten Teilschale unter Ausbildung eines Hohlraums 14 zusammengesetzt ist. Innerhalb des Hohlraums 14 der Türsäule 10 ist eine in den Figuren 1 und 2 erkennbare Verstärkungsanordnung 16 befestigt, welche insbesondere bei einem Überschlag des offenen Personenkraftwagens verhindern soll, dass die jeweilige Türsäule 10 - genauer gesagt deren Dachsäulenbereich 18 - in Richtung zum Fahrzeugboden hin übermäßig einknickt oder eingebogen wird, so dass ein Überlebensraum der Passagiere nicht mehr gewährleistet werden kann. Vielmehr soll die Verstärkungsanordnung 16 gewährleisten, dass der Dachsäulenbereich 18 der Türsäule 10 zumindest nicht übermäßig in Richtung nach unten bzw. in Richtung der Fahrgastzelle gebogen wird.

Neben dem Dachsäulenbereich 18 umfasst die Türsäule 10 einen Türsäulenbereich 20 mit einer Säulenwurzel 22, welche sich von einem Eckbereich bzw. Übergangsbereich 24 am unteren Ende des Dachsäulenbereichs 18 nach unten hin erstreckt.

In diesem Übergangsbereich 24 des Hohlraums 14 der Türsäule 10 ist eine Stützeinrichtung 26 der Verstärkungsanordnung 16 vorgesehen, welche ein Verstärkungsprofil 28 bzw. den Dachsäulenbereich 18 der Türsäule 10 gegen eine übermäßige Bewegung in Richtung der Fahrgastzelle bei einer unfallbedingten Kraftbeaufschlagung abstützt.

Das Verstärkungsprofil 28 erstreckt sich dabei im Wesentlichen über die annähernd gesamte Länge des Dachsäulenbereichs 18 der Türsäule 10 innerhalb von deren Hohlraum 14. Nach vorne hin endet das Verstärkungsprofil 28, welches vorliegend als Verstärkungsrohr ausgebildet ist, etwa am vorderen Ende des Übergangsbereichs 24 in den Türsäulenbereich 20 der Türsäule 10.

Die Stützeinrichtung 26 umfasst insbesondere ein Stützprofil 30 in Form eines Stützrohres, welches sich im Wesentlichen innerhalb des Türsäulenbereichs 20 der Türsäule 10 erstreckt und demzufolge einen Winkel mit dem Verstärkungsprofil 28 einschließt. Sowohl das Verstärkungsprofil 28 als auch das Stützprofil 30 sind vorliegend leicht gebogen ausgebildet.

Weiterhin umfasst die Stützeinrichtung eine Mehrzahl von Blechschalenelementen 32, 34, wobei im Unterschied gemäß Fig. 1 in Fig. 2 das in Betrachtungsrichtung vordere Blechschalenelement 34 der Übersichtlichkeit insbesondere des Stützprofils 30 halber weggelassen worden ist.

Die Blechschalenelemente 32, 34 bilden vorliegend ein in etwa dreieckförmiges Gebilde, welches zusätzlich die winkelig zueinander angeordneten Profile - das Verstärkungsprofil 28 und das Stützprofil 30 - gegenseitig in ihrer Verbindung versteift. Die Blechschalenelemente 32, 34 sind ebenfalls innerhalb des Hohlraums 14 der Türsäule aufgenommen und befestigt, so dass sich insgesamt eine äußerst stabile Stützeinrichtung 26 ergibt, über welche das Verstärkungsprofil 28 großformatig im Übergangsbereich 24 zwischen dem Dachsäulenbereich 18 und dem Türsäulenbereich 20 der Türsäule 10 abgestützt ist.

In Zusammenschau mit den Figuren 3a und 3b wird erkennbar, in welcher Weise das Verstärkungsprofil 28 und das Stützprofil 30 der Stützeinrichtung 26 miteinander verbunden sind bzw. in welcher Weise mittels des korrespondierenden Blechschalenelements eine Aussteifung des Eckbereichs zwischen den beiden Profilen erfolgt. Die beiden isoliert dargestellten Profile - das Verstärkungsprofil 28 und das Stützprofil 30 - sind dabei im vorliegenden Fall ohne die anderen Bauteile der Türsäule 10 bzw. der Stützeinrichtung 26 dargestellt. Zudem sind diese gegenüber den Figuren 1 und 2 gespiegelt dargestellt.

Aus den Figuren 3a und 3b ist nun insbesondere erkennbar, dass das Verstärkungsprofil 28, welches als Rohrprofil ausgebildet ist, im Bereich der Stützeinrichtung 26 - insbesondere im Bereich des Stützprofils 30 - mit einem innerhalb des Hohlraums des Verstärkungsprofils 28 angeordneten Innenprofils 36 verstärkt ist. Dieses Innenprofil 36 ist im vorliegenden Fall ein Innenrohr, welches sich über eine Teillänge des Verstärkungsprofils 28 erstreckt, und zwar insbesondere im Bereich der Anschlussstelle des Stützprofils 30 an das Verstärkungsprofil 28.

Während bei der Ausführungsform gemäß Fig. 3a das Innenprofil an seinen jeweiligen Enden 38, 40 einen geraden bzw. senkrechten Beschnitt aufweist, sind bei der Ausführungsform gemäß Fig. 3b die jeweiligen Enden 38, 40 schräg beschnitten. Dabei ist der Winkel der beiden Beschnitte so gewählt, dass diese im Wesentlichen horizontal verlaufen.

Fig. 4 zeigt jeweils in einer Seitenansicht fünf mögliche Formen des Innenprofils 36, welches jeweils im Bereich der Anbindungsstelle des Stützprofils 30 an das Verstärkungsprofil 28 innerhalb dessen Hohlraums angeordnet sind. Die äußerst linke Darstellung zeigt dabei analog zur Ausführungsform gemäß Fig. 3a wiederum jeweilige gerade bzw. senkrechte Beschnitte an den entsprechenden Enden 38, 40 des Innenprofils 36. Bei der zweiten Variante des Innenprofils 36 sind an dessen Enden 38, 40 parallel zueinander verlaufende Beschnitte vorgesehen, wobei die beiden Beschnitte in einem Winkel von 60° bezogen auf die Längserstreckung des Verstärkungsprofils 28 verlaufen. Bei der mittleren Darstellung sind die Enden 38, 40 des Innenprofils 36 derart beschnitten, dass diese bezogen auf die Längserstreckung des Verstärkungsprofils 28 bzw. des Innenprofils 36 einen Winkel von jeweils 45° einschließen. Die beiden Beschnitte an den Enden 38, 40 verlaufen dabei nicht-parallel zueinander. Demgegenüber zeigt die zweite Ausführungsform von rechts gesehen ebenfalls jeweilige Beschnitte bezogen auf die Längserstreckung des Innenprofils 36 bzw. des Verstärkungsprofils 28 von jeweils 45°, wobei diese im Unterschied zur mittleren Darstellung parallel zueinander verlaufen. Schließlich zeigt die äußerst rechte Darstellung an den Enden 38, 40 des Innenprofils 36 jeweilige Beschnitte bezogen auf die Erstreckungsrichtung des Innenprofils 36 bzw. des Verstärkungsprofils 28 von jeweils 60°, wobei die beiden Enden 38, 40 parallel zueinander verlaufen und im Unterschied zur zweiten Darstellung von links gesehen etwa waagerecht verlaufen, während die Beschnitte gemäß der zweiten Darstellung von links eher in Fahrzeughochrichtung verlaufen.

Als im Rahmen der Erfindung mitumfassend ist es zu betrachten, dass die geraden oder schrägen Beschnitte prinzipiell frei wählbar sind. Gleichfalls ist es denkbar, an einem Ende 38 einen geraden bzw. senkrechten Beschnitt des Innenprofils 36 bezogen auf dessen Erstreckungsrichtung vorzunehmen, während am anderen Ende 40 ein entsprechend schräger Beschnitt bezogen auf die Erstreckungsrichtung des Innenprofils 36 vorgenommen werden kann - oder umgekehrt.

Die Funktion des Innenprofils 36 besteht dabei insbesondere darin, dass das Verstärkungsprofil 28 gezielt an derjenigen Stelle verstärkt werden kann, an welcher insbesondere bei einer unfallbedingten Kraftbeaufschlagung die höchsten Kräfte entstehen. Der kritisch belastete Bereich des Verstärkungsprofils 28 ist im vorliegenden Bereich die Stützstelle, an welcher sich das Verstärkungsprofil 28 an der Stützeinrichtung 26 mit dem Stützprofil 30 abstützt. Durch das Innenprofil 36 kann somit dieser höher belastete Bereich äußerst vorteilhaft verstärkt werden, während beispielsweise ein oberes Ende des Verstärkungsprofils 28 demgegenüber mit einer geringeren Wandstärke und demzufolge mit einem geringeren Gewicht auskommt. Somit ist insgesamt erkennbar, dass mittels eines entsprechenden Innenprofils 36 auf einfache Weise eine Verstärkungsanordnung 16 geschaffen werden kann, welche eine besonders günstige Steifigkeit insbesondere des Verstärkungsprofils 28 aufweist und dennoch äußerst gewichtsgünstig gestaltet ist. Je nach Belastungsfall kann durch die Länge und den Beschnitt des Innenprofils 36, welches vorliegend als Innenrohr ausgebildet ist, eine optimale und preisgünstige Anpassung an die Berechnungsergebnisse erzielt werden. Insbesondere durch das Vorsehen von schrägen Beschnitten bzw. Enden 38, 40 kann ein besonders harmonischer Wandstärkenübergang erreicht werden. Dabei sei an dieser Stelle angemerkt, dass unter dem vorstehend erläuterten Beschnitt nicht unbedingt eine mechanische Bearbeitung in diesem Sinne zu verstehen ist. Es wäre nämlich auch denkbar, dass das Innenprofil 36 nicht entsprechend beschnitten oder dergleichen mechanisch bearbeitet wird, sondern dass es sich beispielsweise um ein Gussbauteil oder ein Kunststoffbauteil handelt. Im vorliegenden Fall ist das Rohr jedoch entsprechend abgelängt worden.

Fig. 5 erläutert schließlich zwei mögliche Verfahren, auf welche Art und Weise das Innenprofil 36 mit dem Verstärkungsprofil 28 verbunden werden kann:
Die linke Darstellung zeigt ein Verfahren, bei welchem ein Halbzeug 42 des Innenprofils 36 und ein Halbzeug 44 des Verstärkungsprofils 28 eingesetzt werden, welche im Querschnitt bereits ihre endgültige Querschnittsform aufweisen. Die hier oval gewählte Querschnittsform des Hohlprofils 44 des Verstärkungsprofils 28 ist dabei in seinem Innenumfang an den Außenumfang des Halbzeugs 42 des Stützprofils 30 formangepasst. Somit ergibt sich beim Zusammenstecken bereits ein radialer Formschluss zwischen den beiden Halbzeugen 42, 44. Mit anderen Worten sind die beiden Halbzeuge 42, 44 bereits vor dem Zusammenstecken umgeformt worden. Nach dem Zusammenstecken wurden dann die Halbzeuge 42 und 44 auch in Längserstreckung bzw. Axialrichtung gegenseitig gesichert, indem eine entsprechende Längsbiegung der beiden Profile - wie durch die Pfeile 46 angedeutet - vorgenommen wird. Durch dieses weitere Umformen sind somit das Verstärkungsprofil 28 und das Innenprofil 36 dann sowohl radial als auch axial gegenseitig festgelegt.

Bei dem in Fig. 5 rechts angedeuteten Herstellungsverfahren werden zwei Halbzeuge 48, 50 verwendet, welche zunächst im Unterschied zum linken Ausführungsbeispiel, bei welchem diese einen ovalen Querschnitt aufweisen, Profile mit einem jeweils kreisrunden bzw. kreisringförmigen Querschnitt eingesetzt. Im vorliegenden Ausführungsbeispiel ist der Innendurchmesser des Halbzeugs 50 des Verstärkungsprofils 28 so gewählt, dass dieser formschlüssig an den Außenumfang des Halbzeugs 48 des Innenprofils 36 angepasst ist. Dies ist jedoch nicht gezwungenermaßen erforderlich. Die beiden Halbzeuge 48, 50 werden dann nach dem Zusammenstecken in einem Verfahrensschritt umgeformt und somit formschlüssig miteinander verbunden. Neben herkömmlichen Umformprozessen kann beispielsweise auch ein Innenhochdruckumformen erfolgen. Im Ergebnis wird jedenfalls wiederum eine Befestigungsanordnung der beiden Profile - des Verstärkungsprofils 28 und des Innenprofils 36 - erreicht, bei welchem die beiden Bauteile in ihrer gegenseitigen Lage fixiert sind, und zwar ohne weitere Verbindungstechnik. Als im Rahmen der Erfindung mitumfassend ist es jedoch zu betrachten, dass auch andere Verbindungen wie beispielsweise Fügverbindungen oder mechanische Verbindungen zum Einsatz kommen könnten. Die vorliegenden Verbindungsformen haben jedoch insbesondere den Vorteil, dass beide Halbzeuge 42, 44 bzw. 48, 50 äußerst einfach und ohne umständlichen Prozess miteinander verbunden werden können. Insbesondere kann somit auf einen Schweißprozess verzichtet werden, welcher aufgrund des Hitzeeintrags die Zugfestigkeit und die Steifigkeit des entsprechenden Stahls reduzieren könnte. Vielmehr wird im vorliegenden Fall die durch die Pfeile 46 angedeutete Kraft in Form einer Biegekraft oder Presskraft eingesetzt, um die beiden Vorteile miteinander zu verbinden.

## Patentansprüche

1. Verstärkungsanordnung (16) innerhalb eines Hohlraums (14) einer Türsäule (10) eines Personenkraftwagens, mit wenigstens einem einen Hohlraum aufweisenden Verstärkungsprofil (28), welches in einem unteren Bereich über eine Stützeinrichtung (26) der Verstärkungsanordnung (16) abgestützt ist, wobei das Verstärkungsprofil (28) mittels eines innerhalb des Hohlraums des Verstärkungsprofils (28) angeordneten Innenprofils (36) verstärkt ist,
**dadurch gekennzeichnet, dass**
das Verstärkungsprofil (28) und das Innenprofil (36) aus jeweiligen Halbzeugen (42,44) gebildet sind, deren Querschnitte vor dem Zusammenstecken umgeformt sind, wobei das Verstärkungsprofil (28) und das Innenprofil (36) nach dem Zusammenstecken durch weiteres Umformen formschlüssig miteinander verbunden sind, und dass das Innenprofil (36) das Verstärkungsprofil (28) im Bereich der Stützeinrichtung (26) verstärkt.

2. Verstärkungsanordnung (16) nach Anspruch 1,
**dadurch gekennzeichnet, dass**
das Innenprofil (36) zumindest im Bereich eines Stützprofils (30) der Stützeinrichtung (26) vorgesehen ist.

3. Verstärkungsanordnung (16) nach Anspruch 1 oder 2,
**dadurch gekennzeichnet, dass**
das Innenprofil (36) an seinen jeweiligen Enden (38, 40) einen geraden oder schrägen Beschnitt aufweist.

4. Verstärkungsanordnung (16) nach einem der vorhergehenden Ansprüche,
**dadurch gekennzeichnet, dass**
das Verstärkungsprofil (28) und das Innenprofil (36) aus jeweiligen Halbzeugen (48,50) gebildet sind, deren Querschnitte nach dem Zusammenstecken umgeformt und formschlüssig miteinander verbunden sind.

5. Verfahren zum Herstellen einer Verstärkungsanordnung (16) innerhalb eines Hohlraums (14) einer Türsäule (10) eines offenen Personenkraftwagens, bei welchem wenigstens ein einen Hohlraum aufweisendes Verstärkungsprofil (28) in einem unteren Bereich über eine Stützeinrichtung (26) der Verstärkungsanordnung (16) abgestützt und mittels eines innerhalb des Hohlraums (14) des Verstärkungsprofils (28) angeordneten Innenprofils (36) verstärkt wird,
**dadurch gekennzeichnet, dass**
das Innenprofil (36) das Verstärkungsprofil (28) im Bereich der Stützeinrichtung (26) verstärkt, und dass das Verstärkungsprofil (28) und das Innenprofil (36) aus jeweiligen Halbzeugen (42,44) gebildet werden, deren Querschnitte vor dem Zusammenstecken umgeformt werden, wobei das Verstärkungsprofil (28) und das Innenprofil (36) nach dem Zusammenstecken durch weiteres Umformen formschlüssig miteinander verbunden werden.

6. Verfahren nach Anspruch 5,
**dadurch gekennzeichnet, dass**
das Innenprofil (36) an seinen jeweiligen Enden (38, 40) mit einem geraden oder schrägen Beschnitt versehen wird.

7. Verfahren nach einem der vorhergehenden Ansprüche,
**dadurch gekennzeichnet, dass**
das Verstärkungsprofil (28) und das Innenprofil (36) aus jeweiligen Halbzeugen (48,50) gebildet werden, deren Querschnitte nach dem Zusammenstecken umgeformt und formschlüssig miteinander verbunden werden.

## Claims

1. Reinforcement arrangement (16) within a cavity (14) of a door post (10) of a passenger car, comprising at least one reinforcement profile (28), which has a cavity and is supported in a lower region via a supporting device (26) of the reinforcement arrangement (16), wherein the reinforcement profile (28) is reinforced by means of an inner profile (36) located within the cavity of the reinforcement profile (28),
**characterised in that**
the reinforcement profile (28) and the inner profile (36) are formed from semi-finished products (42, 44), the cross-sections of which are reshaped before assembly, wherein the reinforcement profile (28) and the inner profile (36) are positively joined to one another after assembly in a further reshaping process, and **in that** the inner profile (36) reinforces the reinforcement profile (28) in the region of the supporting device (26).

2. Reinforcement arrangement (16) according to claim 1,
**characterised in that**
the inner profile (36) is provided at least in the region of a supporting profile (30) of the supporting device (26).

3. Reinforcement arrangement (16) according to claim 1 or 2,
**characterised in that**
the inner profile (36) has a straight or oblique trim at its respective ends (38, 40).

4. Reinforcement arrangement (16) according to any of the preceding claims,
**characterised in that**
the reinforcement profile (28) and the inner profile (36) are formed from semi-finished products (48, 50), the cross-sections of which are reshaped after assembly and positively joined to one another.

5. Method for the production of a reinforcement arrangement (16) within a cavity (14) of a door post (10) of an open passenger car, wherein at least one reinforcement profile (28), which has a cavity, is supported in a lower region via a supporting device (26) of the reinforcement arrangement (16) and reinforced by means of an inner profile (36) located within the cavity (14) of the reinforcement profile (28),
**characterised in that**
the inner profile (36) reinforces the reinforcement profile (28) in the region of the supporting device (26), and **in that** the reinforcement profile (28) and the inner profile (36) are formed from semi-finished products (42, 44), the cross-sections of which are reshaped before assembly, wherein the reinforcement profile (28) and the inner profile (36) are positively joined to one another after assembly in a further reshaping process.

6. Method according to claim 5,
**characterised in that**
the inner profile (36) is provided with a straight or oblique trim at its respective ends (38, 40).

7. Method according to any of the preceding claims,
**characterised in that**
the reinforcement profile (28) and the inner profile (36) are formed from semi-finished products (48, 50), the cross-sections of which are reshaped after assembly and positively joined to one another.

## Revendications

1. Agencement de renforcement (16) à l'intérieur d'un espace creux (14) d'un montant de porte (10) d'un véhicule particulier, ayant au moins un profil de renforcement (28) présentant un espace creux, ledit profil est soutenu dans une zone inférieure par un dispositif de soutien (26) de l'agencement de renforcement (16), le profil de renforcement (28) étant renforcé au moyen d'un profil intérieur (36) disposé dans l'espace creux du profil de renforcement (28), **caractérisé en ce que** le profil de renforcement (28) et le profil intérieur (36) sont conçus à partir de demi-produits (42, 44) dont les sections transversales sont déformées avant leur assemblage, le profil de renforcement (28) et le profil intérieur (36) étant reliés ensemble après leur assemblage par une autre déformation par complémentarité de forme, et **en ce que** le profil intérieur (36) renforce le profil de renforcement (28) dans la zone du dispositif de soutien (26).

2. Agencement de renforcement (16) selon la revendication 1, **caractérisé en ce que** le profil intérieur (36) est disposé au moins dans la zone d'un profil de soutien (30) du dispositif de soutien (26).

3. Agencement de renforcement (16) selon la revendication 1 ou 2, **caractérisé en ce que** le profil intérieur (36) présente sur chacune de ses extrémités (38, 40) une découpe droite ou oblique.

4. Agencement de renforcement (16) selon l'une quelconque des revendications précédentes, **caractérisé en ce que** le profil de renforcement (28) et le profil intérieur (36) sont conçus à partir de demi-produits (48, 50) dont les sections transversales sont déformées après leur assemblage et reliées ensemble par complémentarité de forme.

5. Procédé de production d'un agencement de renforcement (16) à l'intérieur d'un espace creux (14) d'un montant de porte (10) d'un véhicule particulier ouvert, selon lequel au moins un profil de renforcement (28) présentant un espace creux est soutenu dans une zone inférieure par un dispositif de soutien (26) de l'agencement de renforcement (16) et est renforcé au moyen d'un profil intérieur (36) disposé dans l'espace creux (14) du profil de renforcement (28), **caractérisé en ce que** le profil intérieur (36) renforce le profil de renforcement (28) dans la zone du dispositif de soutien (26), et **en ce que** le profil de renforcement (28) et le profil intérieur (36) sont conçus à partir de demi-produits (42, 44) dont les sections transversales sont déformées avant leur assemblage, le profil de renforcement (28) et le profil intérieur (36) étant reliés ensemble par une autre déformation par complémentarité de forme après leur assemblage.

6. Procédé selon la revendication 5, **caractérisé en ce que** le profil intérieur (36) est doté sur chacune de ses extrémités (38, 40) d'une découpe droite ou oblique.

7. Procédé selon l'une quelconque des revendications précédentes, **caractérisé en ce que** le profil de renforcement (28) et le profil intérieur (36) sont conçus à partir de demi-produits (48, 50) dont les sections transversales sont déformées après leur assemblage et reliées ensemble par complémentarité de forme.
